# EUROPÄISCHE PATENTSCHRIFT

(11) **EP 2 771 494 B1**
(45) Veröffentlichungstag und Bekanntmachung des Hinweises auf die Patenterteilung: **22.05.2019**
(21) Anmeldenummer: 12779053.3
(22) Anmeldetag: 26.10.2012
(51) Int. Cl.: C22C 29/08, B22F 3/10

(54) **VERFAHREN ZUR HERSTELLUNG EINER HARTMETALLZUSAMMENSETZUNG**
PRODUCTION OF A HARD METAL COMPOSITION
PROCÉDÉ DE FABRICATION D'UNE COMPOSITION EN MÉTAL DUR

(30) Priorität: 27.10.2011 DE 102011117042
(43) Veröffentlichungstag der Anmeldung: 03.09.2014
(73) Patentinhaber: H.C. Starck Tungsten GmbH, 80339 München (DE)
(72) Erfinder: GERK, Christian, 38729 Ostlutter (DE); ZUMDICK, Markus, 38690 Vienenburg (DE)
(74) Vertreter: dompatent von Kreisler Selting Werner - Partnerschaft von Patent- und Rechtsanwälten mbB
(86) Internationale Anmeldenummer: PCT/EP2012/071254
(87) Internationale Veröffentlichungsnummer: WO 2013/060839

(56) Entgegenhaltungen:
- DE-A1-102010 014 267
- US-A1- 2010 196 734
- US-A1- 2010 206 640
- US-A1- 2011 171 484

## Beschreibung

Die vorliegende Erfindung betrifft ein Verfahren zur Herstellung eines Bauteils, umfassend das Sintern einer Zusammensetzung, die Hartstoffpartikel und Bindemetalle aufweist, sowie ein Bauteil.

Wolframschmelzcarbid (WSC) ist aufgrund seiner extremen Verschleißbeständigkeit ein bevorzugt eingesetzter Werkstoff für Bauteile, die stark erosiven und/oder abrasiven Bedingungen ausgesetzt sind, z.B. geschweißte Verschleißschutzschichten oder Drillbits zur Exploration von Öl und Gas. Die herausragende Verschleißbeständigkeit des Wolframschmelzcarbids beruht auf seiner besonderen Mikrostruktur, die aus alternierenden Lamellen, bestehend aus Wolframcarbid (WC) und Diwolframcarbid (W₂C) aufgebaut ist. Die Verarbeitung von Wolframschmelzcarbid erfolgt üblicherweise durch Infiltration mit Kupfer-Basisloten oder Schweißung mit selbstfließenden nickelhaltigen Legierungen. Aufgrund der Verarbeitung durch Infiltration oder durch Schweißung liegt der Gehalt der metallischen Bindephase üblicherweise bei 20-40 Gew.-%. Im Vergleich dazu liegt der Bindergehalt (Binder = Co oder Ni) handelsüblicher WC-Co oder WC-Ni Hartmetalle mit 3-15% deutlich darunter. Als Hartmetall kann ein gesintertes Bauteil verstanden werden, welches im Wesentlichen einen Hartstoff, beispielsweise einem Carbid, wie etwa Wolframcarbid, und einen metallischen Binder, wie etwa Kobalt oder Nickel, umfasst. Da die Verschleißeigenschaften von WSC dem von WC deutlich überlegen sind, besteht daher eine Nachfrage auch Wolframschmelzcarbid für Hartmetalle mit deutlich geringerem Bindergehalt <20% technisch nutzbar zu machen.

Der Grund für die mangelnde Einsatzfähigkeit von Wolframschmelzcarbiden in Hartmetallen lassen sich im Wesentlichen damit begründen, dass
a) die Wolframschmelzcarbidpartikel durch Diffusion in Co im festen Zustand sowie auch in der während der Sinterung auftretenden flüssigen Phase, im Wesentlichen bestehend aus Kobalt und/oder Nickel, aufgelöst werden,
b) die vorteilhafte Federstruktur beim Sintervorgang thermisch/chemisch umgewandelt wird und
c) das Bauteil nicht porenfrei gesintert werden kann.

In DE 199 24 683 C2 wird die Verwendung von Wolframschmelzcarbid im Kopf eines Rundschaftmeißels beschrieben. Die Herstellung des Meißelkopfes erfolgt in der DE 199 24 683 C2 über Infiltration und nicht über Sinterung.

DE 10 2010 014 267 betrifft Dispersionen, wobei die Dispersionen Hartstoffpartikel und mindestens einen organischen Binder und/oder mindestens einen Plastifizierer enthalten, wobei die Hartstoffpartikel einen inneren Kern aus Wolframschmelzcarbid und eine äußere Hülle aus Wolframcarbid aufweisen.

US2010/0196734 offenbart Verschleißschutzfolien, die Hartstoffpartikel, die eine metallische Hülle aufweisen und Lotmaterialpartikel, ausgewählt aus der Gruppe der Weichlote, Hartlote und Hochtemperaturlote, enthalten.

US2010/0206640 beschreibt einen Meißelkörper mit einer Vielzahl von Klingen, die sich radial davon erstrecken, wobei wenigstens ein Teil der Klingen eine erste Matrixregion aufweist, die eine Vielzahl von ersten Carbidpartikeln umfasst, die durch eine erste Binderphase voneinander getrennt sind. Die ersten Carbidpartikel umfassen eine Mischung aus WC und W₂C und die erste Matrixregion weist weniger als 5 Vol-%, bezogen auf das Gesamtvolumen der ersten Matrixregion, an komplexen Metallcarbiden auf, die in der ersten Binderphase dispergiert sind.

Die Aufgabe der vorliegenden Erfindung bestand nun darin, ein Verfahren zur Herstellung eines porenfreien Hartmetalls, umfassend Wolframschmelzcarbid mit einer intakten Federstruktur bei gleichzeitiger Verwendung eines metallischen Binders zur Verfügung zu stellen. Es wurde überraschend gefunden, dass Wolframschmelzcarbid als Werkstoff für Hartmetalle eingesetzt werden kann, sofern sie chemisch stabilisiert sind und der Sintervorgang speziell geführt wird. Es wurde überraschend gefunden, dass die Überführung des Wolframschmelzcarbids in macroline-WSC, bestehend aus einem Kern aus Wolframschmelzcarbid (WSC) und einer Hülle aus Wolframcarbid (WC) eine ausreichende Stabilisierung bietet, um gesinterte Hartmetalle herzustellen. Die WC-Hülle bietet bei angepassten Sinterbedingungen ausreichend Schutz vor der metallischen Schmelze.

Gegenstand der vorliegenden Erfindung ist ein Verfahren zur Herstellung eines Bauteils umfassend das Sintern einer Zusammensetzung umfassend
a) Hartstoffpartikel umfassend einen inneren Kern aus Wolframschmelzcarbid und eine äußere Hülle aus Wolframcarbid und
b) Bindemetalle ausgewählt aus der Gruppe bestehend aus Co, Ni, Fe und Legierungen, umfassend mindestens ein Metall ausgewählt aus Co, Ni und Fe, wobei die Sinterung in einem Temperaturbereich von 1250°C bis 1400°C über einen Zeitraum von 3 bis 15 Minuten und bei einem Gasdruck unterhalb von 100 Pa (10⁻³ bar) erfolgt, wobei die Abkühlung nach dem Sintervorgang im Temperaturbereich von Sintertemperatur bis 500°C mit einer Abkühlrate von unterhalb 100 k/min erfolgt und wobei die Sinterung unter Einwirken einer Presskraft von 20 bis 80 MPa auf die Zusammensetzung erfolgt.

Ein wesentlicher Bestandteil der zu sinternden Zusammensetzung sind Hartstoffpartikel, umfassend einen inneren Kern aus Wolframschmelzcarbid (WSC) und eine äußere Hülle aus Wolframcarbid (WC). In einer bevorzugten Ausführungsform der vorliegenden Erfindung weist der Hartstoffpartikel einen inneren Kern aus Wolframschmelzcarbid und/oder einer Legierung, umfassend Wolframschmelzcarbid und mindestens einem weiteren Carbid der Elemente, ausgewählt aus der Gruppe 4B, 5B und 6B des Periodensystems der Elemente und eine äußere Hülle aus einer Legierung, umfassend Wolframcarbid und/oder mindestens einem weiteren Carbid der Elemente, ausgewählt aus der Gruppe 4B, 5B und 6B des Periodensystems der Elemente auf. Besteht der innere Kern oder die äußere Hülle der Hartstoffpartikel aus einer Legierung aus Wolframschmelzcarbid und einem weiteren Carbid der Elemente, ausgewählt aus der Gruppe 4B, 5B und 6B des Periodensystems der Elemente, d.h. mindestens einem Carbid der Elemente Ti, Zr, Hf, V, Nb, Ta, Cr, Mo, so kann der Gesamtgehalt an weiteren Carbiden bis zu 10 Gew.-%, bezogen auf den Hartstoffpartikel, betragen.

Bei den gemäß der Erfindung verwendeten Hartstoffpartikeln (im Folgenden abgekürzt mit "macroline WSC") handelt es sich besonders um Wolframschmelzcarbidpartikel bzw. dessen Legierungen mit mindestens einem Carbid der Elemente Ti, Zr, Hf, V, Mo, Nb, Ta und Cr und mit einer Hülle aus Wolframcarbid.

Wolframschmelzcarbid (WSC) ist eine Mischung aus WC und W₂C, das insbesondere ein eutektisches Gefüge aus WC und W₂C darstellt.
Beim WSC handelt es sich um ein eutektisches Gemisch aus WC und Diwolframcarbid (W₂C), wobei das durchschnittliche Kohlenstoff-Massenverhältnis in der Regel zwischen 3,8 und 4,2 Gew.-% liegt. Dies entspricht einer Phasenverteilung von 73-80 Gew.-% W₂C und 20-27 Gew.-% WC. WSC weist ein sehr feinkörniges Kristallgefüge auf, das oftmals als Federstruktur beschrieben wird, und durch schnelles Abschrecken einer Carbidschmelze erhalten wird. Die Hülle der Partikel besteht aus Wolframmonocarbid, genannt auch Wolframcarbid WC.

Ein besonders bevorzugtes Wolframschmelzcarbid mit einer WC-Hülle ist das Macroline Wolframschmelzcarbid (MWC, der Amperweld® Pulver Serie der Firma H.C. Starck GmbH).

Der erfindungsgemäß verwendete Hartstoff, das macroline WSC, lässt sich erhalten, indem WSC durch Aufkohlung bis zu einer gewünschten Tiefe in WC umgewandelt wird, und kann im Allgemeinen zur Herstellung von Verschleißschutzschichten und verschleißfesten Bauteilen eingesetzt werden.

Das erfindungsgemäß verwendete macroline WSC zeichnet sich insbesondere dadurch aus, dass die überragende Zähigkeit und Härte des WSC im Kern des WC/WSC-Verbundes auch dann erhalten bleibt, wenn es in üblicher Weise verarbeitet, d. h. mit einem flüssigen Matrixmaterial in Kontakt gebracht wird.

Der erfindungsgemäß verwendete Hartstoff weist vorzugsweise einen Gehalt an gebundenem Kohlenstoff von 4 bis 6 Gew.-%, insbesondere bevorzugt von 4,5 bis 5,5 Gew. % auf. Der Gehalt an freiem Kohlenstoff sollte 0,1 Gew.-% nicht überschreiten.

Ist der Gehalt an gebundenem Kohlenstoff kleiner als 4 Gew.-%, so bildet sich keine ausreichend dichte WC-Hülle aus, so dass keine Steigerung der chemischen Beständigkeit im Vergleich zu WSC zu beobachten ist. Nähert sich der Gehalt an gebundenem Kohlenstoff dem Grenzwert 6,13 Gew.-% entsprechend reinem WC, so wird der WSC-Kern so klein, dass gegenüber reinem WC keine Steigerung der Härte mehr erreicht wird.

Die vorteilhaften Eigenschaften des erfindungsgemäß verwendeten Hartstoffpulvers bleiben auch dann erhalten, wenn es einen geringen Anteil an WC-Partikeln aufweist, d. h. nicht alle Pulverpartikel aus einem Kern aus WSC und einer WC-Hülle aufgebaut sind. Solche Wolframcarbidpulver sind daher ebenfalls erfindungsgemäß einsetzbar.

Gemäß der Erfindung kann also auch eine Pulvermischung verwendet werden, welche aus Wolframcarbidpartikeln und Wolframschmelzcarbidpartikeln mit einer Wolframcarbidhülle bestehen, eingesetzt werden.

Vorzugsweise weisen jedoch mindestens 70%, insbesondere mindestens 80%, vorteilhaft mindestens 90 % der Pulverpartikel einen Kern aus WSC und eine WC-Hülle auf.

Die mittlere Partikelgröße kann in einem weiten Bereich variieren und richtet sich insbesondere nach der geplanten Verwendung.

Die Partikelgröße bestimmt mittels RoTap-Siebanalyse gemäß ASTM B 214 kann im Allgemeinen bis 3000 µm betragen. Vorteilhaft kann eine Partikelgrößenfraktion bestimmt mittels RoTap-Siebanalyse gemäß ASTM B 214 von 3 µm bis 1500 µm, von 5 µm bis 1000 µm,vorzugsweise von 5 µm bis 500 µm,bevorzugt von 10 µm bis 300 µm oder von 10 bis 180 µm verwendet werden.

Die Einstellung der mittleren Partikelgröße kann beispielsweise durch Wahl eines WSC-Pulvers mit bestimmter mittleren Partikelgröße als Edukt zur Herstellung des macroline WSC erfolgen. Es ist aber beispielsweise auch möglich, aus bereits hergestelltem macroline WSC bestimmte Kornfraktionen zu mischen oder abzutrennen, beispielsweise durch Sieben oder Sichten.

Im erfindungsgemäß verwendeten Hartstoffpulver ist der WSC-Kern von einer dichten Hülle aus Wolframmonocarbid umgeben. Die Dicke der Hülle, bestimmt mittels Lichtmikroskopie am geätzten Material, beträgt vorzugsweise das 0,05 bis 0, 4-fache der mittleren Partikelgröße bestimmt mittels RoTap-Siebanalyse gemäß ASTM B 214, insbesondere bevorzugt das 0,05 bis 0,15-fache.
Macroline WSC weist eine ausgezeichnete Härte auf. Vorzugsweise beträgt die Härte nach Vickers > 2000 HV₀,₁, insbesondere bevorzugt von > 2500 HV₀,₁.

Die Einstellung der Morphologie der Partikel kann beispielsweise durch Einsatz eines geeigneten WSC-Pulvers erfolgen.

Das erfindungsgemäß verwendete Hartstoffpulver kann demnach verschiedene Morphologien aufweisen, beispielsweise scharfkantig gebrochen oder sphärisch. Die sphärische Morphologie bietet prinzipiell Vorteile bezüglich der Verschleißfestigkeit, ist allerdings in der Herstellung aufwändiger als Pulver mit unregelmäßiger Morphologie. Es können auch Mischungen von Pulvern unterschiedlicher Morphologie eingesetzt werden.

Das erfindungsgemäß verwendete Hartstoffpulver kann erhalten werden durch ein Verfahren zur Herstellung des erfindungsgemäßen Wolframcarbids (macroline WSC), wobei Wolframschmelzcarbidpulver in Gegenwart einer Kohlenstoffquelle auf eine Temperatur von 1300°C bis 2000°C, vorzugsweise von 1400°C bis 1700°C erhitzt wird.

Das Verfahren kann in Gegenwart von Inertgas, in Gegenwart von Reaktivgas oder im Vakuum durchgeführt werden. Vorzugsweise wird in Gegenwart von Wasserstoff gearbeitet.

Als Reaktivgas eignet sich insbesondere eine gasförmige Kohlenstoffquelle, beispielsweise Kohlenmonoxid, ein CO-/CO₂-Gemisch, ein Kohlenwasserstoff oder ein Kohlenwasserstoffgemisch, wie etwa Erdgas.

Als Kohlenstoffquelle kommen gasförmige und feste Kohlenstoffquellen in Betracht. Als feste Kohlenstoffquelle können beispielsweise Russ oder Graphit eingesetzt werden. Es ist natürlich auch möglich, Mischungen verschiedener gasförmiger und/oder fester Kohlenstoffquellen einzusetzen.

Durch die Temperaturbehandlung von WSC in Gegenwart der Kohlenstoffquelle kommt es an der Oberfläche zu einer Umwandlung von WSC zu WC. Es bildet sich also um das WSC eine dichte WC-Schicht aus.

Temperatur, Umsetzungszeit und die Menge an zugesetzter Kohlenstoffquelle werden dabei so gewählt, dass sich die Hülle an WC in gewünschter Dicke ausbildet. Es ist dabei darauf zu achten, dass im Inneren der Partikel WSC erhalten bleibt. Die einzuhaltenden Bedingungen werden im Wesentlichen durch die Partikelgröße und Partikelform des eingesetzten WSC-Pulvers bestimmt und lassen sich anhand einfacher Versuchsreihen bestimmen. Wird der Kohlenstoffgehalt zu hoch eingestellt, steigert dies die zur Umsetzung benötigte Zeit und Temperatur und verringert den Anteil des federförmigen Gefüges, d. h. den Anteil an WSC unnötig. Es hat sich als vorteilhaft erwiesen, die Kohlenstoffquelle in einer solchen Menge zuzugeben, dass der Gesamtkohlenstoffgehalt in der Reaktionsmischung, d. h. die Summe der Kohlenstoffgehalte von WSC und Kohlenstoffquelle, 4 bis 6 Gew.-%, vorzugsweise 4,3 bis 5,5 Gew.-% beträgt.

Bei der Umsetzung von WSC mit Pulverpartikeln stark unterschiedlicher Korngrößen können feinere Kornfraktionen im Verhältnis zu ihrem Korndurchmessers stärker karburiert werden als grobe Körner. Dies trifft vor allem für Pulver mit einem hohem Feinanteil < 45 µm zu und kann durch vorherige Abtrennung des Feinanteils und getrennte Umsetzung der verschiedenen Pulverfraktionen verhindert werden. Die Umsetzungszeiten betragen meist 1 bis 10, vorzugsweise 1,5 bis 7 Stunden.

Zur Herstellung des Bauteils gemäß der Erfindung kann beispielsweise von gebrochenem oder sphärischem WSC ausgegangen werden, das auf die gewünschte Korngröße abgesiebt wird. Das Material wird anschließend mit einer Kohlenstoffquelle, z. B. Russ, in der gewünschten Menge intensiv vermengt, einer Wärmebehandlung unterzogen und dabei am Rand aufgekohlt. Zur Wärmebehandlung sind konventionelle Durchschuböfen oder vergleichbare Aggregate geeignet, die beispielsweise im Temperaturbereich zwischen 1550 °C und 1900 °C unter Wasserstoffatmosphäre oder Schutzgas betrieben werden können. Das Gemisch aus WSC und Russ wird beispielsweise in Graphitschiffchen eingefüllt. Bei der Umsetzung reagiert der Kohlenstoff mit dem im WSC vorhandenen W₂C und wandelt dieses in WC um, welches von dem bereits vorhandenen WC nicht mehr zu unterscheiden ist. Der dadurch entstehende WC-Saum bildet eine natürliche Diffusionsbarriere für den Kohlenstoff, so dass die gewünschte Aufkohlungstiefe über die Parameter Zeit und Temperatur gesteuert werden kann.

Ein weiterer wesentlicher Bestandteil der zu sinternden Zusammensetzung gemäß dem erfindungsgemäßen Verfahren zur Herstellung des Bauteils sind Bindemetalle. Diese Bindemetalle sind ausgewählt aus der Gruppe bestehend aus Kobalt, Nickel und Eisen sowie Legierungen, umfassend mindestens ein Metall ausgewählt aus Kobalt, Nickel und Eisen.

Besonders bevorzugte Bindemetalllegierungen umfassend Kobalt und Kobalt-Nickel-Legierungen mit vorzugsweise einem Nickelgehalt bis zu 25 Gew.-%.

Die Sinterung der Zusammensetzung umfassend die Hartstoffpartikel und die Bindemetalle erfolgt in einem Temperaturbereich von 1250°C bis 1400°C über einen Zeitraum von 3 bis 15 Minuten. Die Sinterung erfolgt dabei vorzugsweise bei einem verminderten Gasdruck, der unterhalb von 100 Pa (10⁻³ bar) liegt. In einer besonders bevorzugten Ausführungsform erfolgt die Sinterung bei Temperaturen von 1300°C bis 1370°C.

Es hat sich als vorteilhaft herausgestellt, die Sinterdauer möglichst gering zu halten. In einer bevorzugten Ausführungsform erfolgt die Sinterung bei den Sintertemperaturen über einen Zeitraum von 3 bis 10 Minuten.

Die Sinterung erfolgt erfindungsgemäß bevorzugt als Flüssigphasensinterung. Die Sinterung erfolgt bei einem Gasdruck unterhalb von 100 Pa (10⁻³ bar), weiter bevorzugt unterhalb von 10 Pa (10⁻⁴bar). In einer besonderen Ausführungsform des erfindungsgemäßen Verfahrens erfolgt das Aufheizen der Zusammensetzung bis zur gewünschten Sintertemperatur mit einer Aufheizrate von oberhalb von 50 K/min, vorzugsweise oberhalb von 80 K/min, insbesondere zwischen 90 und 120 K/min. Zum Erhalt einer ausgeprägten Federstruktur der Hartstoffpartikel hat es sich insbesondere als vorteilhaft herausgestellt, die Abkühlung nach dem Sintervorgang, im Temperaturbereich von der Sintertemperatur bis 500°C mit einer Abkühlrate unterhalb von 100 K/min, vorzugsweise unterhalb von 80 K/min, insbesondere in einem Bereich von 30 K/min bis 70 K/min durchzuführen.

Die Sinterung der Zusammensetzung wird, insbesondere im Hinblick auf das Erzielen im Wesentlichen porenfreier Bauteile, druckunterstützt durchgeführt. Hierzu ist das Einwirken einer Presskraft von 20 bis 80 MPa, vorzugsweise 30 bis 50 MPa, auf die zu sinternde Zusammensetzung geeignet. Die Sinterung bei der auf die Zusammensetzung eine zusätzliche Presskraft ausgeübt wird, liefert Bauteile, die eine verminderte Anzahl von Poren aufweisen, insbesondere im Wesentlichen porenfrei sind.

Die zu sinternde Zusammensetzung weist in einer bevorzugten Ausführungsform 60 bis 95 Gew.-%, insbesondere 70 bis 90 Gew.-% Hartstoffpartikel auf, wobei die Gewichtsangaben bezogen sind auf das Gesamtgewicht der Zusammensetzung. In einer weiteren bevorzugten Ausführungsform weist die Zusammensetzung 5 bis 40 Gew.-%, insbesondere 10 bis 30 Gew.-% Bindemetall auf, wobei die Gewichtsangaben bezogen sind auf das Gesamtgewicht der Zusammensetzung. Weiterhin ist ein Bauteil beschrieben, welches gemäß dem erfindungsgemäßen Verfahren erhältlich ist.

In einer bevorzugten Ausführungsform weist das Bauteil im Inneren der Wolframschmelzcarbidpartikel eine Federstruktur auf.

Es hat sich insbesondere gezeigt, dass die erfindungsgemäßen Bauteile im Inneren der Wolframschmelzcarbidpartikel eine Mikrostruktur aus alternierenden Lamellen, bestehend aus Wolframcarbid und Diwolframcarbid (W₂C) aufweisen.

Die Bauteile zeigen überraschend gute Verschleißeigenschaften auf.

Ein weiterer Gegenstand ist die Verwendung des Bauteils unter stark erosiven und/oder abrasiven Bedingungen, vorzugsweise als Meißel im Straßenbau, als Teil eines Drillbits oder als Verschleißteil, beispielsweise als Platte zum Schutz von Oberflächen.

### Beispiele

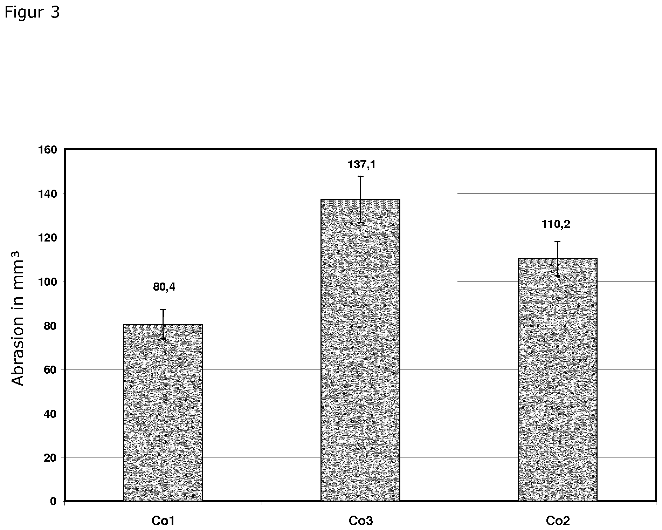

### Beispiel 1 (in Figur 3 mit "Co1" bezeichnet)

76 Gew.-% Wolfram-Schmelzcarbid (WSC) [Korngröße: 150 µm] und 17 Gew.-% Wolframcarbid (WC) [Korngröße 6 µm] werden mit 15 Gew.-% Cobalt für 3 Minuten bei 1370 °C gesintert.

Die Sinterung erfolgt im Vakuum (< 10⁻³ mbar) und bei einer Presskraft von 45 MPa.

### Beispiel 2 (in Figur 3 mit "Co2" bezeichnet):

72 Gew.-% WSC (Korngröße: 300 µm), 18 Gew.-% WC [Korngröße: 6 µm] und 10 Gew.-% Cobalt werden für 3 Minuten bei 1320 °C im Vakuum (< 10⁻³ mbar) und bei einer Presskraft von 45 MPa gesintert.

### Beispiel 3 (in Figur 3 mit "Co3" bezeichnet):

68 Gew.-% WSC (Korngröße: 150 µm), 17 Gew.-% WC [Korngröße: 6 µm] und 15 Gew.-% Cobalt werden für 3 Minuten bei 1330 °C im Vakuum (< 10⁻³ mbar) und bei einer Presskraft von 45 MPa gesintert.

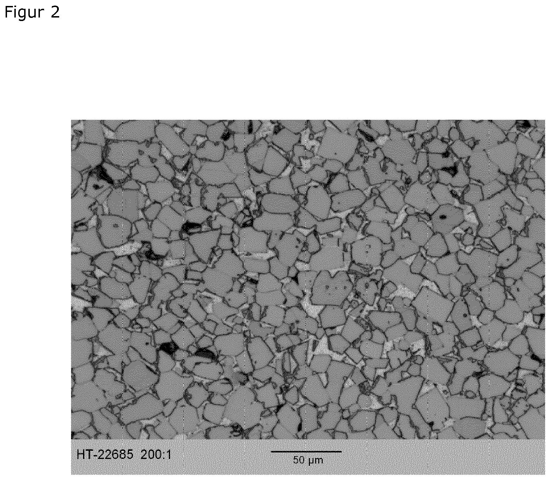

### Vergleichsbeispiel (siehe Figur 2):

92 Gew.-% Wolfram Schmelzcarbid wurde mit 8 Gew.-% Kobalt für 45 Minuten bei 1420 °C im Vakuum gesintert.

### Struktur

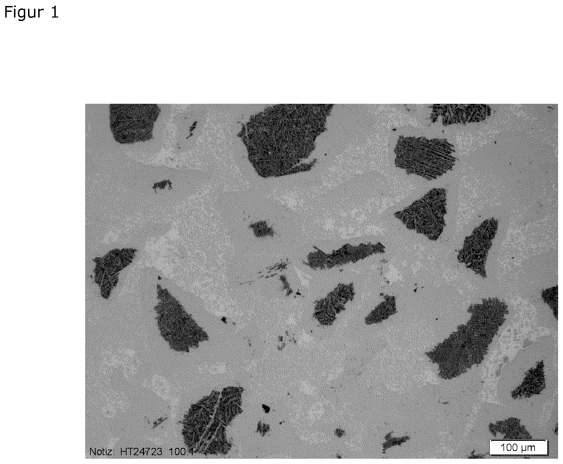

Das Gefüge von Hartmetallen mit Wolframschmelzcarbid (WSC) ist gekennzeichnet durch die WSC-Partikel mit feinlamellarer Struktur aus WC und W₂C (siehe Figur 1). Figur 2 zeigt im Vergleich dazu ein herkömmliches, extragrobes Hartmetall.

Da die Verschleißeigenschaften von WSC stark von der feinen Ausbildung der Lamellen abhängig sind (ein vergröbertes Gefüge zeigt eine deutliche Verschlechterung der Verschleißeigenschaften), erfolgt die Verdichtung des WSChaltigen Hartmetalls über ein Kurzzeitsinterverfahren zum Erhalt der feinen Federstruktur. Weiterhin kann durch den Wechsel vom Infiltrations- zum Sinterverfahren der Bindergehalt zwischen 5% und 40% kontrolliert eingestellt werden.

### Verschleißeigenschaften

In Abbildung 3 sind die Ergebnisse von Verschleißuntersuchungen (ASTM B611-85 (2005)) wiedergegeben. Auffallend ist der besonders geringe Volumenverlust. Dieser liegt bei normalen, extragroben Hartmetallen, die üblicherweise im Bereich Drilling & Mining eingesetzt werden, bei über 300 mm³ (gemäß ASTM B611-85).

## Patentansprüche

1. Verfahren zur Herstellung eines Bauteils umfassend das Sintern einer Zusammensetzung umfassend
a) Hartstoffpartikel umfassend einen inneren Kern aus Wolframschmelzcarbid und eine äußere Hülle aus Wolframcarbid und
b) Bindemetalle ausgewählt aus der Gruppe bestehend aus Co, Ni, Fe und Legierungen, umfassend mindestens ein Metall ausgewählt aus Co, Ni und Fe, wobei die Sinterung in einem Temperaturbereich von 1250 °C bis 1400 °C über einen Zeitraum von 3 bis 15 Minuten erfolgt, und bei einem Gasdruck unterhalb von 100 Pa (10⁻³ bar) erfolgt, wobei die Abkühlung nach dem Sintervorgang im Temperaturbereich von Sintertemperatur bis 500 °C mit einer Abkühlrate unterhalb von 100 K/min erfolgt und wobei die Sinterung unter Einwirken einer Presskraft von 20 bis 80 MPa auf die Zusammensetzung erfolgt.

2. Verfahren gemäß Anspruch 1, **dadurch gekennzeichnet, dass** die Hartstoffpartikel einen Gehalt an gebundenem Kohlenstoff von 4 bis 6 Gew.-%, vorzugsweise 4,3 bis 5,5 Gew.-%, bezogen auf die gesamten Hartstoffpartikel aufweist.

3. Verfahren gemäß Anspruch 1 oder 2, **dadurch gekennzeichnet, dass** die Hülle der Hartstoffpartikel etwa das 0,05 bis 0,4-fache der mittleren Partikelgröße beträgt.

4. Verfahren gemäß mindestens einem der Ansprüche 1 bis 3, **dadurch gekennzeichnet, dass** die Hartstoffpartikel einen inneren Kern aus Wolframschmelzcarbid und/oder einer Legierung umfassend Wolframschmelzcarbid und mindestens einem weiteren Carbid der Elemente ausgewählt aus der Gruppe 4B, 5B und 6B des Periodensystems der Elemente und eine äußere Hülle aus einer Legierung umfassend Wolframcarbid und mindestens einem weiteren Carbid der Elemente ausgewählt aus der Gruppe 4B, 5B und 6B des Periodensystems der Elemente aufweist.

5. Verfahren gemäß mindestens einem der Ansprüche 1 bis 4, **dadurch gekennzeichnet, dass** das Bindemetall eine Legierung umfassend Co, Ni, Fe ist.

6. Verfahren gemäß mindestens einem der Ansprüche 1 bis 5, **dadurch gekennzeichnet, dass** die Sinterung eine Flüssigphasensinterung ist.

7. Verfahren gemäß mindestens einem der Ansprüche 1 bis 6, **dadurch gekennzeichnet, dass** die Sinterung bei einem Gasdruck unterhalb von 10 Pa (10⁻⁴ bar) erfolgt.

8. Verfahren gemäß mindestens einem der Ansprüche 1 bis 7, **dadurch gekennzeichnet, dass** die Sinterung durch Aufheizen mit einer Aufheizrate oberhalb von 50 K/min erfolgt bis die gewünschte Sintertemperatur erreicht ist.

9. Verfahren gemäß mindestens einem der Ansprüche 1 bis 8, **dadurch gekennzeichnet, dass** die Abkühlung nach dem Sintervorgang im Temperaturbereich von Sintertemperatur bis 500°C mit einer Abkühlrate unterhalb vom 80 K/min erfolgt.

10. Verfahren gemäß mindestens einem der Ansprüche 1 bis 9, **dadurch gekennzeichnet, dass** die Zusammensetzung 60 bis 95 Gew.-% Hartstoffpartikel und 5 bis 40 Gew.-% Bindemetall, jeweils bezogen auf das Gesamtgewicht der Zusammensetzung, aufweist.

## Claims

1. A process for producing a component, comprising the sintering of a composition comprising:
a) hard material particles comprising an inner core comprising fused tungsten carbide and an outer shell comprising tungsten carbide, and
b) binder metals selected from the group consisting of Co, Ni, Fe and alloys, comprising at least one metal selected from Co, Ni and Fe;
wherein the sintering is effected in a sintering temperature range of from 1250 °C to 1400 °C for a period of from 3 to 15 minutes, and is effected at a gas pressure of less than 100 Pa (10⁻³ bar), wherein the cooling after the sintering process within the temperature range of from the sintering temperature to 500°C is effected at a cooling rate of below 100 K/min, and wherein the sintering is carried out while applying a pressure of from 20 to 80 MPa to the composition.

2. The process according to claim 1, **characterized in that** the hard material particles further comprise a content of bound carbon of from 4% to 6% by weight, preferably from 4.3% to 5.5% by weight, based on the total hard material particles.

3. The process according to claim 1 or 2, **characterized in that** a thickness of the outer shell is about 0.05 to 0.4 times an average particle size of the hard material particles.

4. The process according to at least one of claims 1 to 3, **characterized in that** said hard material particles have an inner core of fused tungsten carbide and/or an alloy comprising fused tungsten carbide and at least one further carbide of the elements selected from groups 4B, 5B and 6B of the Periodic Table of the Elements, and the outer shell comprises an alloy comprising tungsten carbide and at least one further carbide of the elements selected from groups 4B, 5B and 6B of the Periodic Table of the Elements.

5. The process according to at least one of claims 1 to 4, **characterized in that** said binder metal is an alloy comprising Co, Ni, Fe.

6. The process according to at least one of claims 1 to 5, **characterized in that** the sintering is a liquid-phase sintering.

7. The process according to at least one of claims 1 to 6, **characterized in that** the sintering is carried out at a gas pressure of less than 10 Pa (10⁻⁴ bar).

8. The process according to at least one of claims 1 to 7, **characterized in that** the sintering is carried out by heating at a heating rate of above 50 K/min until the desired sintering temperature is attained.

9. The process according to at least one of claims 1 to 8, **characterized in that** the cooling after the sintering process within the temperature range of from the sintering temperature to 500 °C is effected at a cooling rate of below 80 K/min.

10. The process according to at least one of claims 1 to 9, **characterized in that** the composition comprises from 60% to 95% by weight of hard material particles and from 5% to 40% by weight of the binder metal, in each case based on a total weight of the composition.

## Revendications

1. Procédé pour produire un composant, comprenant l'étape consistant à fritter une composition comprenant
a) des particules d'un matériau dur, comprenant un noyau intérieur en carbure de tungstène de fusion, et une enveloppe extérieure en carbure de tungstène, et
b) des métaux liants choisis dans le groupe consistant en Co, Ni, Fe et des alliages comprenant au moins un métal choisi parmi Co, Ni et Fe,
dans lequel ledit frittage est effectué dans une gamme de températures de 1250°C à 1400 °C pendant une durée de 3 à 15 minutes, et est effectué sous une pression de gaz inférieure à 100 Pa (10⁻³ bar), dans lequel le refroidissement après le processus de frittage est effectué dans une gamme de températures allant de la température de frittage à 500 °C à une vitesse de refroidissement inférieure à 100 K/min, et dans lequel ledit frittage est effectué sous l'action d'une force pressante de 20 à 80 MPa sur la composition.

2. Procédé selon la revendication 1, **caractérisé en ce que** les particules de matériau dur ont une teneur de carbone lié allant de 4 à 6 % en poids, de préférence de 4,3 à 5,5 % en poids, par rapport à la totalité des particules de matériau dur.

3. Procédé selon la revendication 1 ou 2, **caractérisé en ce que** l'épaisseur de l'enveloppe des particules de matériau dur est environ 0,05 à 0,4 fois la taille moyenne des particules.

4. Procédé selon au moins une des revendications 1 à 3, **caractérisé en ce que** lesdites particules de matériau dur présentent un noyau intérieur en carbure de tungstène de fusion et/ou un alliage comprenant le carbure de tungstène de fusion et au moins un autre carbure des éléments choisis dans les groupes 4B, 5B et 6B du tableau périodique des éléments, et une enveloppe extérieure en un alliage comprenant le carbure de tungstène et au moins un autre carbure des éléments choisis dans les groupes 4B, 5B et 6B du tableau périodique des éléments.

5. Procédé selon au moins une des revendications 1 à 4, **caractérisé en ce que** ledit métal liant est un alliage comprenant Co, Ni, Fe.

6. Procédé selon au moins une des revendications 1 à 5, **caractérisé en ce que** ledit frittage est un frittage à phase liquide.

7. Procédé selon au moins une des revendications 1 à 6, **caractérisé en ce que** ledit frittage est effectué sous une pression de gaz inférieure à 10 Pa (10⁻⁴ bar).

8. Procédé selon au moins une des revendications 1 à 7, **caractérisé en ce que** ledit frittage est effectué par chauffage avec une vitesse de chauffage supérieure à 50 K/min jusqu'à ce que la température de frittage désirée soit atteinte.

9. Procédé selon au moins une des revendications 1 à 8, **caractérisé en ce que** le refroidissement après le processus de frittage est effectué dans une gamme de températures allant de la température de frittage à 500 °C à une vitesse de refroidissement inférieure à 80 K/min.

10. Procédé selon au moins une des revendications 1 à 9, **caractérisé en ce que** la composition contient 60 à 95 % en poids de particules de matériau dur et 5 à 40 % en poids de métal liant, respectivement par rapport au poids total de la composition.
